(19) Europäisches Patentamt / European Patent Office / Office européen des brevets

(11) **EP 3 066 457 B1**

(12) **EUROPEAN PATENT SPECIFICATION**

(45) Date of publication and mention
of the grant of the patent:
**19.08.2020   Bulletin 2020/34**

(21) Application number: **14828277.5**

(22) Date of filing: **05.11.2014**

(51) Int Cl.:
*G01N 22/04* *(2006.01)*

(86) International application number:
**PCT/IB2014/065822**

(87) International publication number:
**WO 2015/068113 (14.05.2015 Gazette 2015/19)**

(54) **DEVICE FOR THE DETECTION AND MEASUREMENT OF THE PHYSICAL-CHEMICAL FEATURES OF MATERIALS IN THE FORM OF SHEETS, FILMS, FABRICS, LAYERS DEPOSITED ON A SUPPORT OR THE LIKE**

VORRICHTUNG ZUR DETEKTION UND MESSUNG DER PHYSISCH-CHEMISCHEN MERKMALE VON MATERIALIEN IN FORM VON FOLIEN, FILMEN, GEWEBEN, SCHICHTEN AUF EINEM TRÄGER ODER DERGLEICHEN

DISPOSITIF POUR DÉTECTER ET MESURER DES CARACTÉRISTIQUES PHYSICO-CHIMIQUES DE MATÉRIAUX SOUS FORME DE FEUILLES, DE FILMS, DE TISSUS ET DE COUCHES DISPOSÉES SUR UN SUPPORT OU ANALOGUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.11.2013   IT FI20130266**

(43) Date of publication of application:
**14.09.2016   Bulletin 2016/37**

(73) Proprietor: **Advanced Microwave Engineering S.R.L.**
**50143 Firenze (IT)**

(72) Inventors:
• **SALVADOR, Claudio**
  **I-50018 Scandicci (IT)**
• **BONIFACIO, Filippo**
  **I-50134 Firenze (IT)**
• **BIFFI GENTILI, Frederico**
  **I-50141 Firenze (IT)**

(74) Representative: **Savi, Massimiliano et al**
**Notarbartolo & Gervasi S.p.A.**
**Viale Achille Papa, 30**
**20149 Milano (IT)**

(56) References cited:
**WO-A1-02/097411          GB-A- 883 828**
**US-A- 3 534 260          US-A- 5 333 493**
**US-A1- 2010 295 556**

• **REED R ET AL: "Initial results from the deployment of an ultra-wide band scatterometer", GEOSCIENCE AND REMOTE SENSING SYMPOSIUM, 1994. IGARSS '94. SURFACE AND ATMOSPHERIC REMOTE SENSING: TECHNOLOGIES, DATA ANALYSIS AND INTERPRET ATION., INTERNATIONAL PASADENA, CA, USA 8-12 AUG. 1994, NEW YORK, NY, USA,IEEE, US, vol. 2, 8 August 1994 (1994-08-08), pages 799-801, XP010627104, ISBN: 978-0-7803-1497-9**
• **ERIK LINTZ CHRISTENSEN ET AL: "EMISAR: An Absolutely Calibrated Polarimetric $L$- and $C$-band SAR", IEEE TRANSACTIONS ON GEOSCIENCE AND REMOTE SENSING, IEEE SERVICE CENTER, PISCATAWAY, NJ, US, vol. 36, no. 6, 1 November 1998 (1998-11-01), XP011021134, ISSN: 0196-2892**

## Description

## Field of the invention

The present invention relates to the technical field of the detection and measurement of the physical-chemical features of materials in the form of sheets, films, fabrics, layers deposited on a support or the like, such as, for example, paper and cardboard, plastic films, skins, layered and granular materials in the food-processing industry, fabrics, deposits of powered and granulated materials, such as ceramics and the like.

Said detections and measurements are performed without the direct contact between the measuring device and the material to be measured. Said physical-chemical features comprise, for example, overall dielectric constant, surface density, consistency, i.e. the water-to-dry-part ratio, humidity or thickness.

## Background art

The detection and measurement of the physical-chemical features of materials, such as, for example, surface density, consistency, thickness and, more specifically, degree of humidity, are particularly important in the case of material production processes by means of deposition or processing of layers in which given features need to be monitored during the process itself.

In most cases, technologies which allow a contact detection can be used, for example by means of the device described in Patent IT1367854 by the Applicant of the present patent application. In most other cases, however, the sensor cannot be placed in direct contact with the material to be measured because the material is delicate and fragile. This is the case, for example, of sheets of paper which may be only several tens of $\mu$m thick, or of granulated or powdered layers in the pharmaceutical, ceramic or food-processing industries.

Moreover, in other cases, having sensors in contact with the material is not advisable for problems related to the contamination of the examined material, such as, for example, in the pharmaceutical and food-processing industries.

In order to allow contactless measurements, optical sensors, typically based on the so-called NIR (Near Infra Red) technology, are used in the prior art.

The advantages of the NIR technique are essentially related to the possibility of making a sensor which does not need to come into direct contact with the material and which works on only one side of the material without requiring receivers or reflectors placed on the opposite side, thus simplifying the overall installation of the device.

However, the NIR technique has some major drawbacks, such as, for example, sensitivity to the surface layer only in case of materials which are not particularly thin, and low immunity to surrounding conditions, in the case of very thin materials, because most of the energy employed in the scan may pass beyond the material. Additionally, the use of devices based on the NIR technique requires to monitor also the direct illumination of the material being measured, which illumination may disturb the measurement itself. The color of the material may also affect the measurement performed with this technology.

Using radio frequency for measuring chemical-physical parameters in general, and for measuring humidity in particular, is known.

Water has a high dielectric constant which significantly interferes with the surrounding electromagnetic fields thus allowing to detect its presence, quality and features. For example, the use of microwave sensors to measure humidity in thin materials is the object of the following patents.

Patent US3681684 describes a number of possible solutions to the technical problem of measuring humidity in a sheet of paper. It tackles the problem of the stationary wave which occurs, in systems of this type, because of the interference between the transmitted wave and one or more reflected waves or between one or more mutually reflected waves. This causes the presence of maximum and minimum points in the electric field, and therefore the measurements may be strongly dependent on the mechanical configuration of the system and thus be extremely sensitive to possible changes of position. The device according to Patent US3681684 solves the aforesaid problem with a broadband modulation or with a dielectric mechanical modulator.

The device according to Patent US3681684 comprises an antenna adapted to transmit a signal across a sheet the degree of humidity of which is intended to be determined, said signal crosses the sheet being measured, is reflected by a reflector, crosses the sheet being measured again and is received by the antenna itself. The reflected signal is thus detected by a directional coupler.

Patent US4578998 describes a device adapted to produce microwave fields which cross the sheet being measured in order to detect the humidity thereof. The receiver and the transmitter are on the two opposite sides of the suggested array, placed on the same side, and are used to detect the applied power and the reflected power. The system has two independent reading systems with different polarization, each of which comprises three receivers.

As the measuring receiver is placed on the opposite side with respect to the transmitter, the device according to Patent US4578998 has the problem that the displacement of the device along the sheet being measured is much more complicated and practically not feasible. Moreover, the structure of the device according to Patent US4578998 tackles the problem of transmitter creep by using a high number of receivers thus making the structure complicated and large. Patent US4620146 suggests a device which allows to measure the humidity in a sheet of paper using a transmitter and a receiver arranged on the same side of the sheet. The problem of the stationary wave and of the correct positioning of the sheet being measured is tackled by finding an optimal arrangement which makes the system not very flexible and not easy to be managed in small available spaces.

International application WO2002097411 A1 discloses a method and an apparatus is described to measure at least one physical parameter of a substance such as moisture and salt content. This is done by transmitting a microwave beam through the material to be measured and detect only a reflection of a predetermined polarity of the transmitted waves.

US patent application n. US20100295556A1 discloses a method for the measurement of humidity and/or density in a measurement target by means of a microwave sender and a microwave receiver and an analysing unit, which can determine the phase and the amplitude for radiation of the microwave sender received by the microwave receiver, and in which a complex-valued transfer function of the measurement arrangement can be memorised.

US patent n. US3534260A discloses a method and apparatus for measuring the moisture content of relatively wet sheet material are described employing a microwave source and a microwave receiver which function to transmit and receive energy through the sheet material. The sheet material is oriented at a critical angle relative to the beam of microwave energy to prevent portions of such energy reflected externally by the sheet from reaching such source or receiver and causing distortion. The receiver is connected to components which measure the attenuation of the energy proportional to the moisture content.

GB patent number GB883828A discloses an apparatus for determining the moisture content of, e.g. a travelling paper web, measuring its absorption of microwave electromagnetic energy, said apparatus comprising a generator feeding through two directional couplers to a radiator which projects the energy through a limited area of the travelling web to a reflector, the reflected energy being fed via coupler to a detector and the transmitted energy being fed via coupler to a detector, for comparison.

US patent n. U5333493A discloses an apparatus and method for the determination of moisture content of a sample carried on a conveyor belt. Microwave signals at a number of discrete frequencies within a range are transmitted through the sample and the phase shift of the received signals is averaged and combined with measurement of attenuation or mass per unit area to provide a measure of moisture content of the sample. The invention is applicable in particular to measurement of moisture content of crushed coking and steaming coals and is adapted to cope with varying thickness of the material under measurement.

More information on similar techniques can be found on the following publications: "Initial results from the deployment of an ultra-wide band scatterometer" by R. Reed et Al. ISBN: 978-0-7803-1497-9, and "EMISAR: An absolutely calibrated polarimetric L- and C- band SAR" by E. L. Christensen et Al. ISSN: 0196-2892.

It is an object of the present invention to suggest a device for the detection and measurement of the physical-chemical features of materials in the form of sheets, films, fabrics, skins or layers, which is an improvement with respect to the prior art, and which in particular allows to: be more insensitive to the positioning of the material being measured and to environmental conditions in which the measurement is carried out, so as to have a structure which allows flexible use and positioning and is simple to be constructed and implemented.

## Brief description of the drawings

Fig. 1 shows a functional block chart of the device according to the invention.
Fig. 2 shows the approximate positioning of the antennas and of the dihedral reflector in a preferred embodiment of the device according to the present invention with respect to the material the features of which are measured.
Fig. 3 shows a reflector of the "multi-dihedral" type according to a second preferred embodiment of the present invention.
Fig. 4 shows a reflector of the grid type with microwave-absorbing material according to a third preferred embodiment of the present invention.
Fig. 5 shows a reflector of the double-reflection grid type according to a fourth preferred embodiment of the present invention.

## SUMMARY OF THE INVENTION

The present invention relates to a device for the detection and measurement of the physical-chemical features of materials in the form of sheets, fabrics, skins or layers, comprising an electromagnetic sensor, preferably a microwave sensor coupled to a passive reflector on the other side of the material to be measured.

The description further comprises methods and calculation algorithms for processing output data, adapted to make the measurement immune from the typical environmental factors of industrial environments.

The device according to the present invention is characterized by a structure to be used to ensure flexibility of use and positioning and simplicity of construction, and is adapted to operate correctly with respect to any positioning of the sheet being measured, by virtue of the particular broadband processing method used.

In a first preferred embodiment, the device according to the present invention uses a dihedral reflector, uniform in transversal direction with respect to the material being measured and fixed, and a sensor head adapted to be moved transversely with respect to the material being measured, which allows to measure the humidity in the whole section of the material being measured, for example.

Moreover, the device according to the present invention arranges both the transmitter and the receiver on the same side as the material being measured, making possible, inter alia, to make a path with known attenuation for the measurement signal which may be used to compensate for possible creep of the electronic components used, thus making the measurement particularly accurate. According to the present invention, the reflector used is of the passive type, and therefore does not require electric connections, thus making the device of the present invention also adapted to difficult environments subject to high humidity, water and high temperatures.

In further preferred embodiments, the device according to the present invention may further comprise self-cleaning means, heat-detecting and/or heat-adjusting means, adapted to keep the conditions of said device, and thus the measurements to be performed, constant and stable during use and over time.

### *Detailed description of the invention*

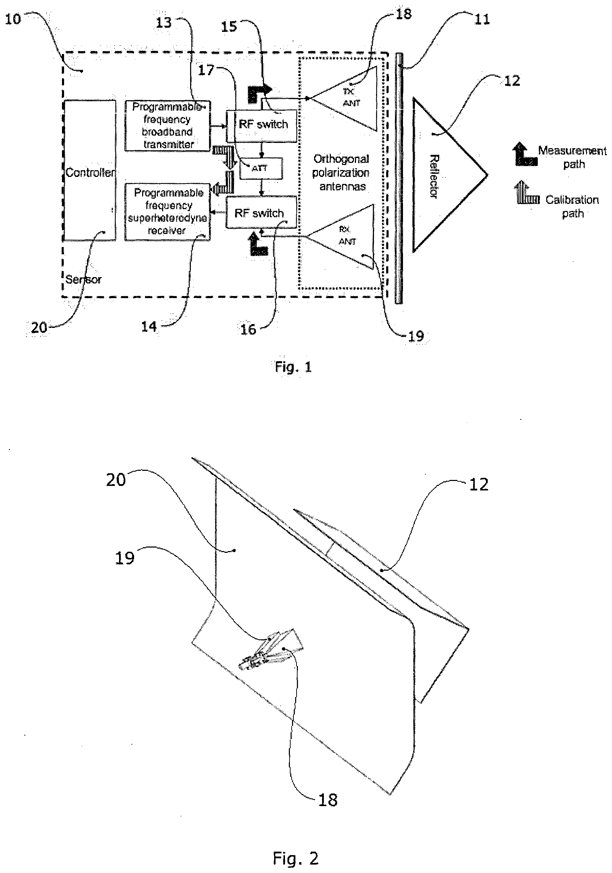

With reference to accompanying figure 1, the device according to the present invention comprises a sensor block 10, adapted to be arranged in the vicinity of the material to be measured 11, on one side of said material, and a reflector 12, preferably a microwave reflector, arranged near the material to be measured 11, on the opposite side of said material 11 with respect to said sensor block 10.

Said block sensor comprises: a broadband transmitter 13, of the programmable frequency type, a broadband receiver, preferably of the programmable frequency type 14, adapted to output a signal, for example digital data, proportional to the power received at a given frequency, a first microwave frequency switch 15 associated with said transmitter 13, a second microwave frequency switch 16 associated with said receiver 14, an attenuator 17 associated with said first 15 and second 16 switches, a transmitting antenna 18 associated with said first microwave frequency switch 15, a receiving antenna 19 associated with said second microwave frequency switch 16, a controller 20 associated with said transmitter 13 and said receiver 14 and adapted to drive and program said transmitter 13 and said, receiver 14 and to acquire and process the signal received from said receiver 14 and to calculate the measurement of at least one chemical-physical parameter of said material 11.

Said controller 20 may advantageously be provided with communication means, either wired or wireless, with which said measurement may be transferred to external electronic devices, for analyzing, processing or storing.

In a preferred embodiment of the present invention, said receiving antenna 19 is in orthogonal polarization with respect to the transmission antenna 18. For example, a HORN type antenna with a gain of 15dB, which has excellent features in terms of bandwidth, directionality and polarization purity, may be used. Alternatively, other types of antennas may be used, such as for example planar antennas, which are less performing but smaller and cheaper than HORN antennas.

Said receiving 19 and transmitting 18 antennas of the device according to the present invention are preferably provided with a radome consisting of a layer of non-conductive dielectric material.

Said reflector 12 is of the passive type, free of power or electronics, and is shaped so that the polarization of the reflected electric field is rotated by 90 geometric degrees with respect to the incident electric field.

Said first microwave frequency switch 15 is made I by means of a single-pole two-way device, in which the common terminal is connected to the transmitter 13, while the other terminals are connected to said transmitting antenna 18 and to said attenuator 17.

Said second microwave frequency switch 16 is made by means of a single-pole two-way device, in which the common terminal is connected to the transmitter 14, while the other terminals are connected to said receiving antenna 19 and to said attenuator 17.

The operating principle of the present invention is based on the double crossing of the material being measured by the microwave frequency electromagnetic field produced by said sensor 10.

The first crossing occurs along the trajectory from the sensor to the reflector, while the second occurs along the trajectory from the reflector to the sensor. The two crossings are parallel and have opposite directions. The electric fields along the two paths are preferably orthogonally polarized. Thereby, the received electric field will be orthogonally polarized with respect to the transmitted electric field. The spatial orthogonality of the receiving and transmitting polarizations allows to use an antenna which is orthogonally polarized with respect to the transmitted signal, and thus avoid the direct coupling between the transmitting and receiving antennas. Thereby, the sensor can receive only the desired signal, i.e. that intentionally produced by the reflector. This allows to have a completely passive reflector, which therefore does not require any connection to the sensor. Moreover, the fact that the transmitter and the receiver belonging to the same sensor are arranged on the same side of the material being measured allows a better management of the sensor itself, allows to perform a differential measurement, allows to perform a self-calibration procedure, allows not to have microwave frequency connections outside the sensor block body itself, and finally to obtain smaller sizes and dimensions.

The fields are attenuated/phase-shifted in relation to the chemical/physical properties of the material when they cross the material being measured and this variation is detected during the step of receiving by associating the measurement of the quantity to be measured with this variation.

The electromagnetic fields used may have any frequency which may be varied according to needs, and in particular according to the dielectric permeability of the material being measured and the thickness thereof. Microwaves and the so-called millimetric waves are particularly effective.

In a preferred embodiment of the present invention, all the frequencies in the 15GHz-20GHz band are used for detecting the amount of water in sheets from 30 to 400g/m2.

Different scanning frequencies are used to make the system as immune as possible from all factors which may change the stationary wave conditions (vibrations, offset of the sheet being measured, etc.), by mediating the measurements performed on a frequency band instead of on a single frequency.

Moreover, in a preferred embodiment, the present invention uses a method of self-calibrating the measurements on the used frequency band which takes the frequency response of the entire electronics of the device into account by using a differential self-calibrated measurement. This self-calibration method also contributes to maintaining the conditions of said device, and thus of all the measurements performed therewith, constant and stable during use and over time, regardless of changes to external conditions.

In detail, the sensor according to the present invention, in which the transmitter and the receiver are on the same side of the material being measured, allows to perform a periodical self-calibration of said transmitter and receiver during normal operation. The device according to the present invention operates as follows: by means of an appropriate setting of the controller, several measurements are performed during a first step, each measurement consisting of acquiring the attenuation encountered by the signal at the various selected single frequencies, along the path of the microwave frequency wave between transmitter and receiver across said attenuator which attenuates the wave by a known, constant factor. This path is named "calibration path".

During a second step, other several measurements are performed consisting of acquiring the attenuation encountered by the signal at the various single selected frequencies, the path also comprising the antennas, the material being measured and the reflector.

The measurements may be performed across the path comprising the antennas, the material being measured and the reflector, or across the calibration path comprising only the attenuator, as illustrated above. A power vector C, which is assumed as expressed in dBm, is obtained from the received power measurements according to the calibration path. The characteristic attenuation value of the path across the attenuator is known and is assumed equal to A dB:

$$\mathbf{C}[dBm] = \begin{pmatrix} C_1 \\ C_2 \\ \\ C_n \end{pmatrix} \quad \mathbf{A}[dB] = \begin{pmatrix} A_1 \\ A_2 \\ \\ A_n \end{pmatrix}$$

A power vector P, also expressed in dBm, is obtained from the power measurements performed across along the path comprising the antennas, the material being measured and the reflector, instead:

$$\mathbf{P} = \begin{pmatrix} P_1 \\ P_2 \\ \\ P_n \end{pmatrix}$$

The sought parameter is obtained, i.e. the attenuation value related to the measurement performed across the material, which will be indicated by M and expressed in dB, from the previous two measurements:

$$\mathbf{M} = \begin{pmatrix} M_1 \\ M_2 \\ \\ M_N \end{pmatrix} = \mathbf{P} - \mathbf{C} + \mathbf{A}$$

Thereby, the instrument can be periodically and automatically calibrated, making it immune from the inevitable creep of the electronics used, which creep could have consequences, such as fluctuations of transmitted power or reception gain.

The device according to the present invention can thus simply obviate the gain variations that the system may display on the used frequency band by means of a self-calibration procedure. The self-calibration procedure may be implemented by periodically and automatically measuring the system gain at the same frequencies used for the other measurements, and thus obtain a system correction vector S, also formed by elements expressed in dB. At this point, the data related to power may be corrected in the value D:

$$\mathbf{D} = \mathbf{M} + \mathbf{S}$$

The value D is used to calculate the root mean square (RMS) value:

$$\mathbf{D}_{rms} = 10 \log \left( \frac{\sum_{i=1}^{N} 10^{\frac{Di}{10}}}{N} \right)$$

At this point, the value D is associated, by means of an appropriate function, with the value to be measured related to the physical parameter to be evaluated. In general, the quantity to be measured will be expressed as a function of the previously calculated value D:

$$g = f\left(\mathbf{D}_{rms}\right)$$

This function f represents the mathematical model which describes the relationship between the $D_{rms}$ data and the quantity to be measured, and is thus highly dependent on the type of measurement which must be performed.

For example, in order to operate a calibration of the system of the present invention, an interpolation may be operated between a set of measurements of the Drms value performed as illustrated above, and a set of values of the physical parameter to be measured, collected using different measurement techniques, for example, in the case of the measurement of the humidity parameter, by means of the gravimetric technique with drying.

The ordinary least pairs rectilinear interpolation is to be preferred in the case of measurements of parameters displaying variations of only a few percentage points during the process in which the measurement is performed, because it is simple and effective, otherwise interpolation by means of spline functions may be used. A preferred embodiment of the present invention comprises means for cleaning the radome in order to keep the features of the device according to the present invention, and the measurements performed thereby, as stable and constant as possible.

In a preferred embodiment of the present invention, said radome is kept clean by using jets of compressed air (or equivalent gas) emitted by appropriate means, appropriately associated with the device according to the present invention. Said appropriate means may be adapted, in particular, to emit laminar jets of air or conical-shaped jets of air, like those emitted by nozzles, or the like.

Moreover, the device according to the present invention advantageously comprises temperature measuring means associated with said controller 20 and adapted to communicate the temperature value of said device and/or of at least one component of said device to said controller 20, so that controller 20 can correct the measurement value performed by applying correct coefficients which are known on the basis of the current temperature.

In a first preferred embodiment of the present invention, with reference to accompanying figure 2 which shows the pair of antennas 18, 19 of sensor 10, the material under test 20 and the reflector 12, said reflector 12 may consist of a metal dihedral of simple construction and uniform geometry in the longitudinal direction, comprising two reflecting planes which are mutually inclined by an angle of approximately 90 degrees.

For the dihedron to reflect the entire incident electromagnetic field and thus obtain a rotation of the polarization by 90 degrees, the incident electric field must be inclined by an angle of 45 degrees with respect to the longitudinal axis of the dihedron.

This type of reflector, also named corner reflector, acts so that the incident electric field component with polarization parallel to the longitudinal axis of the dihedron is reflected by keeping the same direction, while the incident electric field component with polarization orthogonal to the longitudinal axis of the dihedron is reflected in opposite direction so as to obtain a reflected electric field orthogonal to the incident field in the case of incident electric field oriented by 45° with respect to the longitudinal axis of the dihedron.

The dihedral reflector of the described type has many advantages: it is simple to be made; its electromagnetic behavior is simple by virtue of the fact that the dihedron can be approximated as a single reflector arranged on the conjunction axis between the two incident planes, and therefore does not give rise to multiple paths which could cause destructive or constructive interferences, which are harmful for the measurement; the cross-polarized reflection is total, so that the entire incident field on the dihedral reflector is reflected with polarization orthogonal with respect to the incident polarization in the above-described case in which the incident signal has polarization rotated by 45 degrees with respect to the longitudinal axis of the dihedron; development is uniform in longitudinal direction, which is particularly advantageous in the case of measurements on extended sheets, because it allows a single reflector to cover the whole section of the machine. The greatest drawback of the reflectors of this type is their size, particularly with regards to depth, which is equal to approximately half of their front opening.

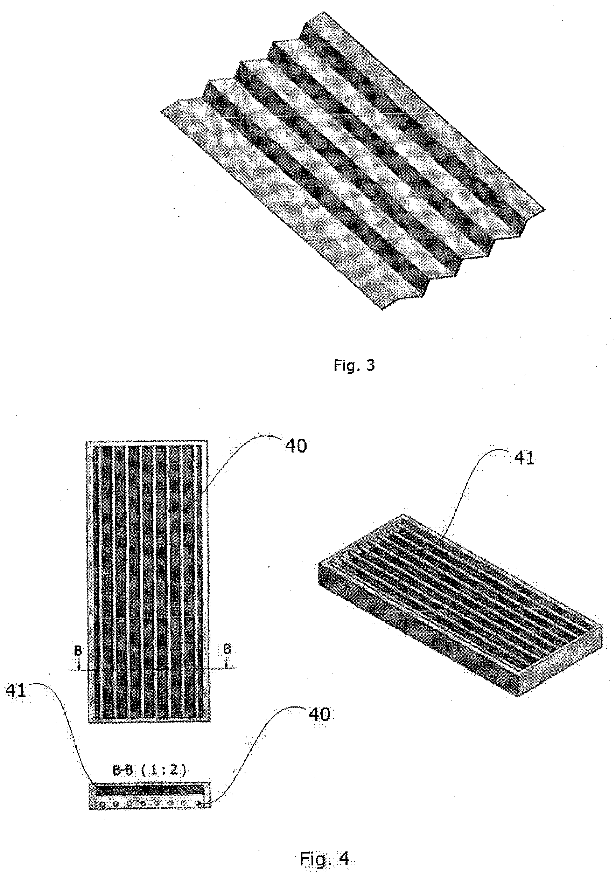

In a second preferred embodiment of the present invention, a reflector is formed by a plurality of dihedrons, as shown in accompanying figure 3. In this case, the depth of the reflector is considerably reduced, but some of the positive features of the single dihedron are lost. In detail, reflectors of the multi-dihedral type have the advantage of being smaller than the single dihedral reflector but have drawbacks related to the multiple reflection paths given by the presence of a plurality of reflectors which provide different width and shift phase fluctuations which are recomposed in a constructive or destructive manner in the receiver thus causing received signal width fluctuations.

In a third preferred embodiment of the present invention, with reference to accompanying figure 4, said reflector is of the grid type with microwave-absorbing material, i.e. formed by a plurality of thread-like parallel reflectors 40 and arranged to form a grid. A microwave-absorbing material 41 is placed on the back of this grid. A reflector of the grid type, if reached by an incident wave inclined by 45 degrees with respect to the axis of the thread-like reflectors, only reflects the field component parallel to said thread-like reflectors. The reflected component may be broken down, in turn, into two components, one of which is polarized at 90 degrees with respect to the incident field and is received by the reception antenna. Thus, by using a grid reflector, only one part of the reflected field has a polarization rotated by 90 degrees in space. Therefore, the use of a grid reflector implies the reduction of the reflected power with respect to the case with dihedral reflector because the reflection is not total as the incident field component orthogonal to the reflectors of the grid is not reflected, but proceeds its path and is then absorbed by the absorbing material placed behind said grid.

The reflectors of the grid type with microwave-absorbing material have the advantage of being more compact in size with respect to the dihedral reflector but, like the multi-dihedral reflectors also, they have the described drawbacks related to the multiple reflection paths. However, if the grid is sufficiently extended and close-knit, the problem of the multiple paths can be ignored considering that the number of the aforesaid multiple reflection paths is sufficiently large to make the fluctuations with respect to the resulting mean effect negligible.

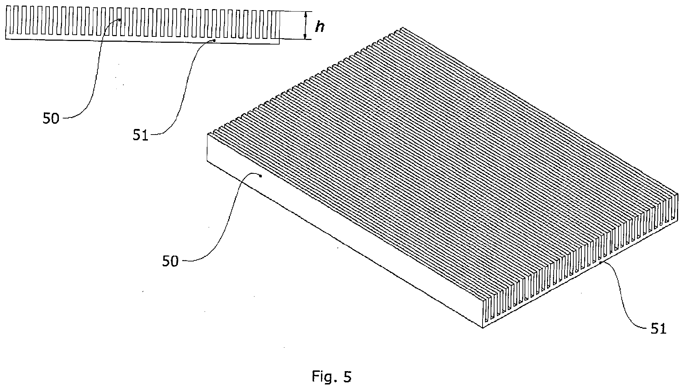

In a further preferred embodiment of the present invention, said reflector is of the double-reflection grid type, as shown in accompanying figure 5. In this embodiment, the grid, which may be made by extrusion, is formed by a plurality of fins 50 which originate from a metal plane 51.

Said fins are made so as to cover said metal plane 51 completely. The height of said fins must be preferably equal to ¼ of the wavelength of the band center frequency of the sensor, i.e. with reference to accompanying figure 5, if $h$ is the height of the fins and $f_0$ is the band center frequency of the sensor system, the optimal operating condition is:

$$h = \frac{c}{4 f_0}.$$

The same considerations made for the grid reflector with microwave-absorbing material apply to this type of reflectors although the amount of reflected, orthogonally polarized energy is higher.

The present invention preferably uses the linear polarization antennas. In this case, the electric field must have a polarization inclined by 45 degrees with respect to the symmetry axis of the reflector for all types of reflector described with reference to the various embodiments of the present invention.

The present invention, however, may also advantageously use circular polarization antennas. In this case, if reflectors with orthogonally polarized reflection are used, like those shown in accompanying figures 2, 3, 4 and 5, both antennas used for transmitting and receiving must have the same electric field rotation direction.

Again using circular polarization antennas, a uniform reflector can be used, for example consisting of a conducting material plane or surface which can be locally approximated as flat. In this case, the antennas used for transmitting and receiving must have mutually opposite electric field rotation directions.

With respect to the case in which linear polarization antennas are used, circular polarization antennas have the advantage that the angle between sensor and reflector is not longer bound and that the reciprocal positioning can thus be arbitrary.

On the contrary, circular polarization antennas have worse performance in terms of direct coupling and usable band.

**Claims**

1. A device for the detection and measurement of the properties of materials in the form of sheets, films, fabrics, layers deposited on a support, comprising:

   a sensor block (10) adapted to be arranged in the vicinity of the material to be measured (11), on one side of said material (11) and comprising, in turn,

   a programmable frequency microwave broadband transmitter (13),
   a programmable frequency microwave broadband receiver (14) adapted to provide an output signal proportional to the power and / or to the phase received at a given frequency,
   a transmitting antenna (18), a receiving antenna (19) in orthogonal polarization with respect to said transmitting antenna (18),
   a controller (20) associated with said transmitter (13) and with said receiver (14) and adapted to drive and program said transmitter (13) and said receiver (14),
   a first microwave frequency switch (15) associated with said transmitter (13) and comprising a device of the single-pole two-way type, wherein the common terminal is connected to said transmitter (13), while the other terminals are connected to said transmitting antenna (18) and to said attenuator (17),
a second microwave frequency switch (16) associated with said receiver (14) and comprising a device of the single-pole two-way type, wherein the common terminal is connected to said receiver (14), while the other terminals are connected to said receiving antenna (19) and to said attenuator (17), an attenuator (17) associated with said first (15) and second (16) switches;

a passive reflector (12) for microwave frequency electromagnetic waves, arranged in the vicinity of the material to be measured (11), on the opposite side of said material (11) with respect to said sensor block (10) and adapted to reflect the incident electromagnetic field so that the reflected electromagnetic field is orthogonally polarized with respect to said incident electromagnetic field,
said sensor block (10) being adapted to:

- transmit a microwave electromagnetic field having different scanning frequencies belonging to a preselected frequency band across said attenuator (17) along the trajectory from said transmitter (13) to said receiver (14),
- receive the microwave electromagnetic field after crossing said attenuator (17),
- measure the received electromagnetic field,
- evaluate the attenuation incurred by said transmitted microwave electromagnetic field after crossing said attenuator (17), and
- perform a self-calibration according to said attenuation;
- transmit a microwave electromagnetic field having different scanning frequencies belonging to a preselected frequency band through said material to be measured (11) from said sensor (10) to said reflector (12),
- receive the microwave electromagnetic field reflected by said reflector (12) through said material to be measured (11) from said reflector (12) to said sensor (10), said transmitted electromagnetic field and said reflected electromagnetic field being orthogonally polarized,
- measure said reflected microwave frequency electromagnetic field so as to evaluate the attenuations and/or phase shifts thereof, with respect to said transmitted microwave frequency electromagnetic field, incurred during said crossings of said material to be measured (11),
- calculate at least one parameter related to the properties of said material to be measured (11) thus associating the value thereof with said attenuations and/or phase shifts,
- calculate the average of the measurements performed on said preselected frequency band.

2. A device according to the preceding claim, **characterized in that** said average of the measurements is a RMS average on said preselected frequency band.

3. A device according to one or more of the preceding claims, **characterized in that** said sensor (10) is further adapted to self-correct its gain over said preselected frequency band.

4. A device according to one or more of the preceding claims, **characterized in that** said reflector (12) is selected from the group comprising: metal dihedral reflectors; multiple dihedral or multi-dihedral reflectors.

5. A device according to claim 3, **characterized in that** said reflector (12) is selected from the group comprising: grid reflectors with microwave-absorbing material comprising a plurality of parallel thread-like reflectors (40) arranged to form a grid and a layer of microwave-absorbing material (41) on the back of said grid; double-reflection grid reflectors comprising a plurality of fins (50), which originate from a metal plane (51).

6. A device according to one or more of the preceding claims, **characterized in that** said antennas (18, 19) have a polarization selected from the group comprising: linear polarization and circular polarization.

7. A device according to one or more of the preceding claims, **characterized in that** said receiving (19) and transmitting (18) antennas comprise a radome.

8. A device according to one or more of the preceding claims, comprising temperature measuring means adapted to communicate the temperature value of said device and/or of at least one component of said device to said controller (20), so that the controller (20) can correct the value of the measurement made by applying known correction coefficients based on the detected current temperature value.

9. A device according to one more of claims from 7 to 8 when depending on claim 7, comprising means for producing jets of compressed air associated with said radome and adapted to emit jets of compressed air adapted to clean surface deposits from said radome.

**Patentansprüche**

1. Vorrichtung für die Erkennung und Messung der Eigenschaften von Materialien in der Form von Folien, Filmen, Geweben, Schichten, die auf einem Träger abgelagert sind, umfassend:

einen Sensorblock (10), der angepasst ist, um in der Nähe des zu messenden Materials (11) an einer Seite des Materials (11) angeordnet zu werden, und der nacheinander umfasst:

einen Breitband-Mikrowellensender (13) mit programmierbarer Frequenz,
einen Breitband-Mikrowellenempfänger (14) mit programmierbarer Frequenz, der angepasst ist, um ein Ausgangssignal bereitzustellen, das proportional zu der Leistung und/oder zu der Phase ist, die bei einer gegebenen Frequenz empfangen wird,
eine Sendeantenne (18), eine Empfangsantenne (19) in orthogonaler Polarisation mit Bezug auf die Sendeantenne (18),
ein mit dem Sender (13) und mit dem Empfänger (14) verbundenes Steuergerät (20), das angepasst ist, um den Sender (13) und den Empfänger (14) anzusteuern und zu programmieren,
einen ersten Schalter (15) für Mikrowellenfrequenzen, der mit dem Sender (13) verbunden ist und eine Vorrichtung des Typs mit einem Pol und zwei Wegen umfasst, wobei der gemeinsame Anschluss an den Sender (13) angeschlossen ist, während die anderen Anschlüsse an die Sendeantenne (18) und den Dämpfer (17) angeschlossen sind,
einen zweiten Schalter (16) für Mikrowellenfrequenzen, der mit dem Empfänger (14) verbunden ist und eine Vorrichtung des Typs mit einem Pol und zwei Wegen umfasst, wobei der gemeinsame Anschluss an den Empfänger (14) angeschlossen ist, während die anderen Anschlüsse an die Empfangsantenne (19) und an den Dämpfer (17) angeschlossen sind,
einen Dämpfer (17), der mit dem ersten (15) und zweiten (16) Schalter verbunden ist;

einen passiven Reflektor (12) für elektromagnetische Wellen mit Mikrowellenfrequenzen, der in der Nähe des zu messenden Materials (11) an der gegenüberliegenden Seite des Materials (11) mit Bezug auf den Sensorblock (10) angeordnet ist und angepasst ist, um das einfallende elektromagnetische Feld zu reflektieren, sodass das reflektierte elektromagnetische Feld mit Bezug auf das einfallende elektromagnetische Feld orthogonal polarisiert ist,

wobei der Sensorblock (10) angepasst ist, um:

- ein elektromagnetisches Mikrowellenfeld, das verschiedene Abtastfrequenzen aufweist, die zu einem vorgewählten Frequenzband gehören, durch den Dämpfer (17) hindurch entlang der Trajektorie von dem Sender (13) zu dem Empfänger (14) zu senden,
- das elektromagnetische Mikrowellenfeld nach Durchqueren des Dämpfers (17) zu empfangen,
- das empfangene elektromagnetische Feld zu messen,
- die Dämpfung, die sich das gesendete elektromagnetische Mikrowellenfeld nach Durchqueren des Dämpfers (17) zugezogen hat, zu bewerten, und
- eine Selbstkalibrierung gemäß der Dämpfung durchzuführen;
- ein elektromagnetisches Mikrowellenfeld mit verschiedenen Abtastfrequenzen, die zu einem vorgewählten Frequenzband gehören, von dem Sensor (10) durch das zu messende Material (11) hindurch an den Reflektor (12) zu senden,
- das elektromagnetische Mikrowellenfeld, das von dem Reflektor (12) durch das zu messende Material (11) hindurch von dem Reflektor (12) an den Sensor (10) reflektiert wird, zu empfangen, wobei das gesendete elektromagnetische Feld und das reflektierte elektromagnetische Feld orthogonal polarisiert sind,
- die Frequenz des reflektierten elektromagnetischen Mikrowellenfelds zu messen, um die Dämpfungen und/oder Phasenverschiebungen desselben mit Bezug auf die gesendete Frequenz des elektromagnetischen Mikrowellenfelds, die es sich während der Durchquerungen des zu messenden Materials (11) zugezogen hat, zu bewerten,
- mindestens einen Parameter zu berechnen, der im Zusammenhang mit den Eigenschaften des zu messenden Materials (11) steht, wodurch der Wert desselben den Dämpfungen und/oder Phasenverschiebungen zugeordnet wird,
- den Mittelwert der Messungen, die an dem vorgewählten Frequenzband durchgeführt wurden, zu berechnen.

2. Vorrichtung nach dem vorstehenden Anspruch, **dadurch gekennzeichnet, dass** der Mittelwert der Messungen ein RMS-Mittelwert auf dem vorgewählten Frequenzbands ist.

3. Vorrichtung nach einem oder mehreren der vorstehenden Ansprüche, **dadurch gekennzeichnet, dass** der Sensor (10) ferner angepasst ist, um seine Verstärkung über das vorgewählte Frequenzband hinweg selbst zu korrigieren.

4. Vorrichtung nach einem oder mehreren der vorstehenden Ansprüche, **dadurch gekennzeichnet, dass** der Reflektor (12) aus der Gruppe gewählt ist, die umfasst: dihedrale Metallreflektoren; Mehrfach-Dihedralreflektoren oder Multi-Dihedralreflektoren.

5. Vorrichtung nach Anspruch 3, **dadurch gekennzeichnet, dass** der Reflektor (12) aus der Gruppe gewählt ist, die umfasst: Gitterreflektoren mit einem Mikrowellen absorbierenden Material mit einer Vielzahl von parallelen fadenähnlichen Reflektoren (40), die angeordnet sind, um ein Gitter und eine Schicht aus Mikrowellen absorbierendem Material (41) auf der Rückseite des Gitters auszubilden; Gitterreflektoren mit doppelter Reflexion, die eine Vielzahl von Rippen (50) umfassen, die aus einer Metallfläche (51) entspringen.

6. Vorrichtung nach einem oder mehreren der vorstehenden Ansprüche, **dadurch gekennzeichnet, dass** die Antennen (18, 19) eine Polarisation aufweisen, die aus der Gruppe gewählt ist, die umfasst: lineare Polarisation und kreisförmige Polarisation.

7. Vorrichtung nach einem oder mehreren der vorstehenden Ansprüche, **dadurch gekennzeichnet, dass** die Empfangsantennen (19) und die Sendeantennen (18) eine Antennenkuppel umfassen.

8. Vorrichtung nach einem oder mehreren der vorstehenden Ansprüche, die ein Temperaturmessmittel umfasst, das angepasst ist, um den Temperaturwert der Vorrichtung und/oder von mindestens einer Komponente der Vorrichtung an das Steuergerät (20) zu übermitteln, sodass das Steuergerät (20) den Wert der durchgeführten Messung korrigieren kann, indem es bekannte Korrekturkoeffizienten auf der Grundlage des erfassten aktuellen Temperaturwerts anwendet.

9. Vorrichtung nach einem der Ansprüche 7 bis 8, die, wenn sie von Anspruch 7 abhängt, ein Mittel zum Erzeugen von Druckluftstrahlen umfasst, das mit der Antennenkuppel verbunden ist und angepasst ist, um Druckluftstrahlen auszusenden, die angepasst sind, um Oberflächenablagerungen von der Antennenkuppel zu reinigen.

**Revendications**

1. Dispositif pour la détection et la mesure des propriétés de matériaux sous la forme de feuilles, de films, de tissus et de couches, déposés sur un support, comprenant :

un bloc capteur (10) conçu pour être agencé au voisinage du matériau à mesurer (11), sur un côté dudit matériau (11) et comprenant, à son tour,
un émetteur hyperfréquence programmable à large bande (13),
un récepteur hyperfréquence programmable à large bande (14) conçu pour fournir un signal de sortie proportionnel à la puissance et/ou à la phase reçue à une fréquence donnée,
une antenne d'émission (18), une antenne de réception (19) en polarisation orthogonale par rapport à ladite antenne d'émission (18),
un contrôleur (20) associé audit émetteur (13) et audit récepteur (14) et conçu pour piloter et programmer ledit émetteur (13) et ledit récepteur (14),
un premier commutateur hyperfréquence (15) associé audit émetteur (13) et comprenant un dispositif du type monopolaire bidirectionnel, dans lequel la borne commune est connectée audit émetteur (13), tandis que les autres bornes sont connectées à ladite antenne d'émission (18) et audit atténuateur (17),
un second commutateur hyperfréquence (16) associé audit récepteur (14) et comprenant un dispositif du type monopolaire bidirectionnel, dans lequel la borne commune est connectée audit récepteur (14), tandis que les autres bornes sont connectées à ladite antenne de réception (19) et audit atténuateur (17),
un atténuateur (17) associé auxdits premier (15) et second (16) commutateurs ;

un réflecteur passif (12) pour ondes électromagnétiques hyperfréquences, agencé au voisinage du matériau à mesurer (11), sur le côté opposé dudit matériau (11) par rapport audit bloc capteur (10) et conçu pour réfléchir le champ électromagnétique incident de sorte que le champ électromagnétique réfléchi est polarisé de manière orthogonale par rapport audit champ électromagnétique incident,
ledit bloc capteur (10) étant conçu pour :

- émettre un champ électromagnétique hyperfréquence ayant différentes fréquences de balayage appartenant à une bande de fréquences présélectionnée au travers dudit atténuateur (17) le long de la trajectoire dudit émetteur (13) audit récepteur (14),
- recevoir le champ électromagnétique hyperfréquence après avoir traversé ledit atténuateur (17),
- mesurer le champ électromagnétique reçu,
- évaluer l'atténuation subie par ledit champ électromagnétique hyperfréquence émis après avoir traversé ledit atténuateur (17), et
- réaliser un auto-étalonnage en fonction de ladite atténuation ;
- émettre un champ électromagnétique hyperfréquence ayant différentes fréquences de balayage appartenant à une bande de fréquences présélectionnée à travers ledit matériau à mesurer (11) dudit capteur (10) audit réflecteur (12),
- recevoir le champ électromagnétique hyperfréquence réfléchi par ledit réflecteur (12) à travers ledit matériau à mesurer (11) dudit réflecteur (12) audit capteur (10), ledit champ électromagnétique émis et ledit champ électromagnétique réfléchi étant polarisés de manière orthogonale,
- mesurer ledit champ électromagnétique hyperfréquence réfléchi de façon à évaluer ses atténuations et/ou décalages de phase, par rapport audit champ électromagnétique hyperfréquence émis, subis lors desdites traversées dudit matériau à mesurer (11),
- calculer au moins un paramètre se rapportant aux propriétés dudit matériau à mesurer (11) en associant ainsi sa valeur auxdites atténuations et/ou auxdits décalages de phase,
- calculer la moyenne des mesures réalisées sur ladite bande de fréquence présélectionnée.

2. Dispositif selon la revendication précédente, **caractérisé en ce que** ladite moyenne des mesures est une valeur quadratique moyenne sur ladite bande de fréquences présélectionnée.

3. Dispositif selon l'une ou plusieurs des revendications précédentes, **caractérisé en ce que** ledit capteur (10) est en outre conçu pour auto-corriger son gain sur ladite bande de fréquences présélectionnée.

4. Dispositif selon l'une ou plusieurs des revendications précédentes, **caractérisé en ce que** ledit réflecteur (12) est sélectionné parmi le groupe comprenant : des réflecteurs dièdres métalliques ; des réflecteurs à multiples dièdres ou multi-dièdres.

5. Dispositif selon la revendication 3, **caractérisé en ce que** ledit réflecteur (12) est sélectionné parmi le groupe comprenant : des réflecteurs en grille ayant un matériau absorbant les hyperfréquences comprenant une pluralité de réflecteurs parallèles en forme de fil (40) agencés pour former une grille et une couche de matériau absorbant les hyperfréquences (41) sur l'arrière de ladite grille ; des réflecteurs en grille à double réflexion comprenant une pluralité d'ailettes (50), qui proviennent d'un plan métallique (51).

6. Dispositif selon l'une ou plusieurs des revendications précédentes, **caractérisé en ce que** lesdites antennes (18, 19) possèdent une polarisation sélectionnée parmi le groupe comprenant : une polarisation linéaire et une polarisation circulaire.

7. Dispositif selon l'une ou plusieurs des revendications précédentes, **caractérisé en ce que** lesdites antennes de réception (19) et d'émission (18) comprennent un radôme.

8. Dispositif selon l'une ou plusieurs des revendications précédentes, comprenant des moyens de mesure de température conçus pour communiquer la valeur de température dudit dispositif et/ou d'au moins un composant dudit dispositif audit contrôleur (20), de sorte que le contrôleur (20) peut corriger la valeur de la mesure effectuée par l'application de coefficients de correction connus basés sur la valeur de température actuelle détectée.

9. Dispositif selon l'une ou plusieurs des revendications 7 à 8 lorsque prise en dépendance de la revendication 7, comprenant des moyens pour produire des jets d'air comprimé associés audit radôme et conçus pour émettre des jets d'air comprimé conçus pour nettoyer des dépôts de surface à partir dudit radôme.

Fig. 1

Fig. 2

Fig. 3

B-B (1:2)

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 1367854
- US 3681684 A
- US 4578998 A
- US 4620146 A
- WO 2002097411 A1
- US 20100295556 A1
- US 3534260 A
- GB 883828 A
- US U5333493 A

**Non-patent literature cited in the description**

- **R. REED et al.** *Initial results from the deployment of an ultra-wide band scatterometer,* ISBN 978-0-7803-1497-9
- **E. L. CHRISTENSEN et al.** *EMISAR: An absolutely calibrated polarimetric L- and C- band SAR,* ISSN 0196-2892